# EUROPÄISCHE PATENTSCHRIFT

(11) **EP 1 264 636 B1**
(45) Veröffentlichungstag und Bekanntmachung des Hinweises auf die Patenterteilung: **27.07.2005**
(21) Anmeldenummer: 01113182.8
(22) Anmeldetag: 30.05.2001
(51) Int. Cl.: B01L 3/00, G01N 33/48, G01N 35/04

(54) **Vorrichtung und Verfahren zum Untersuchen von Körperflüssigkeiten**
Device and method for analysing body fluids
Dispositif et procédé d'analyse des fluides corporels

(43) Veröffentlichungstag der Anmeldung: 11.12.2002
(73) Patentinhaber: Behnk, Holger, D-22417 Hamburg (DE)
(72) Erfinder: Behnk, Holger, D-22417 Hamburg (DE)
(74) Vertreter: Glawe, Delfs, Moll & Partner

(56) Entgegenhaltungen:
- EP-A- 0 369 168
- US-A- 3 681 029
- US-A- 4 226 531
- US-A- 4 309 384

## Beschreibung

Die Erfindung betrifft eine Vorrichtung zum Untersuchen von Körperflüssigkeiten mit einer Anordnung von mehreren in die Vorrichtung einsetzbaren Küvetten, in die die zu untersuchende Körperflüssigkeit und ein Reagenz getrennt einbringbar und nach Ablauf einer Inkubationszeit in einer Reaktionskammer zusammenbringbar sind, und mit mindestens einer Messstation, wobei die Küvetten in einer kreisförmigen Anordnung miteinander verbunden sind, jeweils einen Aufnahmeraum mit einem radial nach außen ansteigenden Boden und einer radial außen vom Aufnahmeraum angeordneten Reaktionskammer aufweisen und die Küvettenanordnung mit Hilfe eines Rotors um ihre Achse drehbar ist. Die Erfindung betrifft auch ein Verfahren und eine Küvettenanordnung zum Untersuchen von Körperflüssigkeiten.

Es ist eine Vorrichtung mit Küvettenanordnung bekannt, bei der Probe und Reagenz getrennt in einen Aufnahmeraum und einen Reaktionsraum der Küvetten eingebracht werden und bei der das im Aufnahmeraum befindliche Reagenz durch Fliehkraft in den Reaktionsraum bewegt wird (US-A-4 226 531). Nicht vorgesehen ist dort jedoch ein Mechanismus, der dafür sorgt, dass die beiden Flüssigkeiten nach ihrem Zusammenbringen gründlich durchmischt werden. Möglicherweise erfolgt die Durchmischung durch wechselnde Drehgeschwindigkeiten der Küvettenanordnung. Dann sind aber Maßnahmen erforderlich, die einen unkontrollierten Austritt der Flüssigkeiten verhindern. In der genannten Schrift ist zu diesem Zweck ein Deckel vorgesehen, der die gesamte Küvettenanordnung abdeckt. Durch diesen Deckel wird die Herstellung kompliziert, da zwei Teile durch Spritzgießen hergestellt und miteinander verschweißt werden müssen .

Zudem ist die Rotorküvette der US-A-4 226 531 für den Einsatz in Zentrifugalanalysierern konzipiert. Bei einem solchen System ist die Rotationsgeschwindigkeit um ein Vielfaches höher als bei der Vorrichtung der vorliegenden Erfindung. Durch die große Zentrifugalkraft kann keine Bestimmung mit einem Reagenz vorgenommen werden, das Schwebeteilchen enthält, wie z.B. eine Bestimmung der APTT mit kaolinaktiviertem Reagenz. Die Messzellen sind im Gegensatz zur Vorrichtung der Erfindung horizontal angeordnet. Es wird eine hohe Rotationsgeschwindigkeit benötigt, um die waagerecht liegenden Messzelle mit der Probe zu füllen. Zentrifugalanalysierer werden im allgemeinen nur mit entsprechend angepassten Reagenzien betrieben und sind daher weder für Vollblutmessungen noch für unangepasste Reagenzien geeignet.

Eine weitere bekannten Vorrichtung der eingangs beschriebenen Art (US-A-4 309 384) weist eine herausnehmbare Küvettenanordnung gemäß Oberbegriff des Anspruchs 1, einen Rotor, sowie eine Meßstation auf, die stationär im Bereich des Umfangs der Küvettenanordnung vorgesehen ist. Ihr fehlt es ebenfalls an Einrichtungen zum kontrollierten Durchmischen der verschiedenen Flüssigkeiten.

Die Aufgabe der Erfindung besteht in der Schaffung einer Vorrichtung, eines Verfahrens und einer Küvettenanordnung, die kostengünstiger sind und die Durchführung von Mehrfachmessungen auf einfachere und zuverlässigere Weise erlauben.

Die erfindungsgemäße Lösung besteht in einer Küvettenanordnung gemäß Anspruch 1 und in einer Vorrichtung gemäß Anspruch 2.

Das Verfahren zum Betreiben dieser Vorrichtung zeichnet sich dadurch aus, dass Reagenz in den Aufnahmeraum und Körperflüssigkeit in die Reaktionskammer wenigstens einer der Küvetten eingefüllt werden, die Küvettenanordnung in die Vorrichtung eingesetzt wird und mit Hilfe des Rotors eine Drehung um mindestens 360° durchgeführt wird, um festzustellen, welche Küvetten Flüssigkeiten enthalten, die untersucht werden sollen, die Küvetten mit den Reagenzien und Proben inkubiert werden, durch anschließende schnelle Rotation der Küvettenanordnung die Reagenzien in die Reaktionskammer verbracht werden, und anschließend die optischen und/oder magnetischen Messungen durchgeführt werden.

Die erfindungsgemäße Küvettenanordnung zum Untersuchen von Flüssigkeiten mit mehreren Küvetten zeichnet sich dadurch aus, dass in jeder Reaktionskammer ein Rührglied aus magnetisch anziehbarem Material angeordnet ist.

Erfindungsgemäß können sowohl die Aufnahmeräume für die Reagenzien als auch die Reaktionsräume, in die die Flüssigkeiten eingebracht werden, nach oben offen sein. Die Küvettenanordnungen können daher durch Spritzguß hergestellt werden, wobei eine einfache Entformung möglich ist.

Die nach oben offenen Küvetten können platzsparend ineinander gestapelt werden. Durch dieses Ineinanderstapeln können dann auch gleich die magnetischen Rührglieder festgehalten werden, so dass sie nicht verloren gehen. Dies bedeutet erhebliche Einsparungen an Raum.

Das magnetische Rührglied sorgt nicht nur für eine bessere Durchmischung. Vielmehr zieht das Rührglied bei seiner Bewegung Gerinnsel derart zusammen, dass eine sehr große Trübungsdifferenz auftritt, die optisch besser gemessen werden kann, als wenn die Trübung über das gesamte Reaktionsvolumen stattfindet.

Reagenz und Körperflüssigkeit dürfen erst relativ kurz vor der beginnenden Reaktion inkubiert werden, d. h. typischerweise auf eine Temperatur von 37°C erwärmt werden. Mit der erfindungsgemäßen Vorrichtung ist es nun nicht erforderlich, das Reagenz vorher zu inkubieren, wobei inkubiertes Reagenz nur eine verhältnismäßig kurze Haltbarkeit hat, d. h. Zeit, in der es verwendet werden kann. Das Reagenz kann vielmehr gekühlt aufbewahrt werden und kann direkt in die Küvetten eingebracht werden. Auch die Körperflüssigkeiten können gekühlt aufbewahrt werden und in die Küvetten eingebracht werden. Dies kann außerhalb der Messvorrichtung geschehen, so dass z. B. eine neue Küvettenanordnung befüllt werden kann, während mit einer vorhergehenden noch eine Messung durchgeführt wird. Dies erhöht den möglichen Probendurchsatz. Weist die Küvettenanordnung zwölf Küvetten auf, rechnet man 120 Sekunden für die Inkubation, 60 Sekunden für den Meßvorgang und 20 Sekunden zum Umsetzen der Küvettenanordnungen, so sind 216 Messungen pro Stunde möglich. Eine höhere Arbeitsgeschwindigkeit ist auch möglich, da die Küvetten oben offen sind und die Flüssigkeiten nicht wie beim Stand der Technik sorgfältig durch enge Öffnungen eingegeben werden müssen.

Ist die Küvettenanordnung in die Vorrichtung eingesetzt, so wird sie zunächst einmal um mindestens 360° um ihre Achse gedreht, damit die Vorrichtung erfassen kann, in welchen Küvetten Messungen durchgeführt werden sollen oder in welchen bereits vorher Messungen durchgeführt worden sind. Dieser Vorgang ist ebenso wie die anschließenden Messungen zu automatisieren. So kann z. B. die Identifizierung des Patienten per Tastatur eingegeben werden oder von einem angeschlossenen Rechner angefordert werden. Die entsprechenden Eingaben und Kontrollen können durch eine oder mehrere Tasten und Anzeigen erfolgen.

Anschließend wird während einer vorbestimmten Zeit, z. B. 120 Sekunden, die Erwärmung der Küvetten und Flüssigkeiten durchgeführt, was durch einfachen Wärmekontakt der Küvette mit dem Rotor, auf den sie angeordnet ist, erfolgen kann. Die Küvetten besitzen dabei eine verhältnismäßig große Oberfläche, die mit entsprechenden Flächen des Rotors in Berührung kommt, so daß der Wärmeaustausch schnell stattfindet.

Nach Ablauf der Inkubationszeit wird der Rotor und werden damit die Küvetten in eine so schnelle Drehung versetzt, daß die Reagenzien aufgrund der Fliehkraft in die Reaktionskammern gelangen und sich dort mit der Körperflüssigkeit vereinigen. Die entsprechende Drehbewegung wird dabei schonend und langsam begonnen, um ein Verspritzen zu vermeiden.

Wenn sich die Küvettenanordnung dreht, kommen dabei die Küvetten nacheinander in die Nähe eines Magneten, der das Rührglied anzieht. Dieses Rührglied ist magnetisch anziehbar und vorteilhafterweise eine Kugel. Durch die durch das Magnetfeld bewirkte Bewegung der Kugel wird nicht nur das Gemisch von Reagenz- und Körperflüssigkeit umgerührt. Im Falle einer Gerinnungsmessung zieht die Kugel bei ihrer Bewegung Gerinnsel derart zusammen, daß eine sehr große Trübungsdifferenz auftritt, die optisch gemessen werden kann, so daß eine sichere Erkennung der Gerinnung garantiert ist.

Jede Küvette mit dem Rührglied und der Mischung von Reagenz und Körperflüssigkeit läuft auf ihrer Kreisbahn nicht nur an dem Magneten, sondern auch an einer oder mehreren Meßstationen vorbei, bei der in erster Linie eine optische Messung vorgenommen werden kann. Dabei kann entweder reflektiertes Licht oder transmittiertes Licht gemessen werden. Auch kann die Messung an unterschiedlichen Meßstationen mit unterschiedlichen Wellenlängen erfolgen, um so unterschiedliche Parameter zu messen. Schließlich kann durch einen Sensor an einer Meßstation die Position des Rührgliedes detektiert werden, das sich nicht mehr bewegen wird, wenn die Mischung aus Reagenz und Körperflüssigkeit geronnen ist. Dies ermöglicht es, den Zeitpunkt der Gerinnung auch bei undurchsichtigen Flüssigkeiten wie z. B. Blut festzustellen.

Vorteilhafterweise ist der Boden der Reaktionskammern sowohl in Radial- als in Umfangsrichtung konkav gewölbt. Dadurch kann eine besonders wirksame Mischwirkung insbesondere mit einem kugelförmigen Rührglied erreicht werden. Am Anfang hält sich das Rührglied am tiefsten Punkt des Bodens der Reaktionskammer auf, also in der Mitte. Die Wölbungen sind dabei so stark, daß die Kugel durch die Fliehkraft nicht von diesem Ort nennenswert wegbewegt wird. Kommt die Kugel aber in den Bereich des Magnetfeldes, wird sie von dieser angezogen und bewegt sich auf der Wölbung nach oben, wodurch eine kreisende Bewegung der Kugel initiiert wird. Gleichzeitig erreicht die Kugel dabei aber den Bereich der mehr oder weniger senkrechten Wände und ist nicht mehr durch die radial nach außen sich erhöhende Wölbung an einer Bewegung nach außen gehindert. Die Kugel bewegt sich vielmehr an dieser Stelle ganz nach außen, an der entsprechenden Außenwand entlang, um dann auf der gegenüberliegenden Seite wieder nach unten zu fallen und durch die Wölbungen in die Mitte des Bodens der Reaktionskammer zurückgeführt zu werden. Diese Bewegung hört auf, sobald die zu untersuchende Flüssigkeit geronnen ist. In diesem Falle verbleibt die Kugel am Boden. Mit einem Magnetsensor kann dann festgestellt werden, daß sich die Kugel nicht mehr nach oben bewegt, wodurch detektiert wird, daß die Flüssigkeit geronnen ist.

Zweckmäßigerweise sind die Krümmungen der beiden Wölbungen unterschiedlich.

Wie bereits erwähnt, sind die Küvetten an ihrer Oberseite offen. Außerdem erweitern sich alle Kammern und Aufnahmeräume zweckmäßigerweise leicht nach oben. Dies hat einmal den Vorteil, daß die Küvettenanordnung durch Spritzguß herzustellen ist, wobei dann die Formhälften nach Fertigstellung einer Küvettenanordnung ohne Schwierigkeiten nach oben und unten abgezogen werden können. Andererseits können die Küvetten auf diese Weise ineinander gestapelt werden. Man kann zur Vorbereitung von Messungen in jeden der Reaktionsräume ein Rührglied einbringen und die nächste Anordnung darüber stapeln, die dann die Öffnungen der darunterliegenden Küvettenanordnung verschließt, so daß die Kugeln nicht mehr herausfallen können. Dies kann dann natürlich mit weiteren darüber gestapelten Küvettenanordnungen wiederholt werden. Dies ist eine vorbereitende Arbeit, die unabhängig vom Zeitpunkt späterer Messungen durchgeführt werden kann. Selbstverständlich könnten die Küvetten auch in dieser Weise mit Kugeln versehen und übereinander gestapelt vom Hersteller geliefert werden.

Mit der optischen Mehrwerterfassung können mit der erfindungsgemäßen Vorrichtung und dem erfindungsgemäßen Verfahren chromogene Substrate, Latex- und Blutgerinnungszeiten bestimmt werden. Die Gerinnungsmessung wird dabei durch aktive Bewegung der Kugel unterstützt, d. h., daß die Kugel in ihrer Bewegung das Gerinnsel derart zusammenzieht, daß eine sehr große Trübungsdifferenz gemessen werden kann. Es ist aber auch die Untersuchung anderer Körperflüssigkeiten oder anderer Zustände bzw. Parameter dieser Körperflüssigkeiten möglich.

Die Erfindung wird im folgenden anhand einer vorteilhaften Ausführungsform unter Bezugnahme auf die beigefügten Zeichnungen beschrieben. Es zeigen:
- Fig. 1: einen Schnitt durch zwei diametral gegenüberliegende Küvetten entlang der Linie 1/1 von Fig. 2;
- Fig. 2: die erfindungsgemäße Küvettenanordnung von oben;

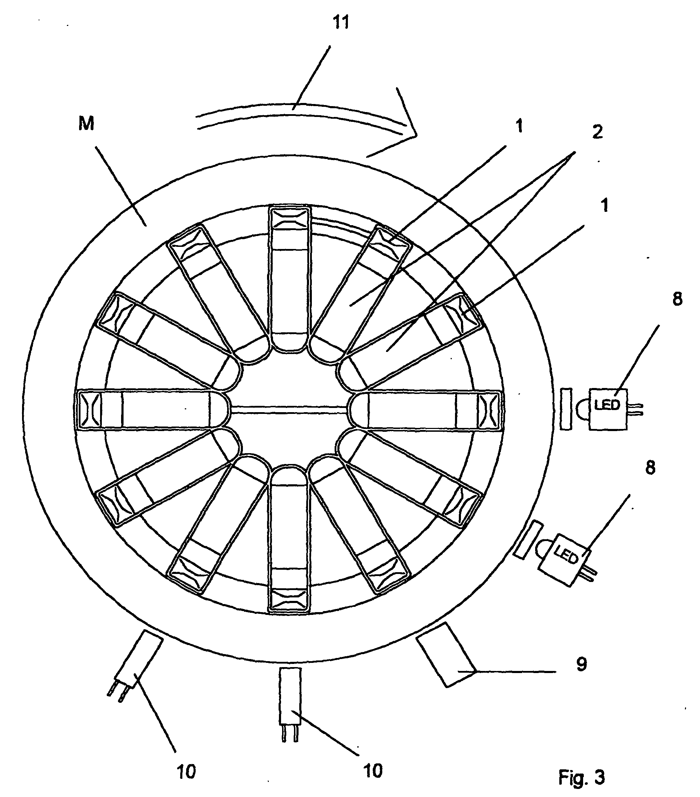

- Fig. 3: die prinzipielle Anordnung der Küvettenanordnung in einem Rotor mit Meßstationen;
- Fig. 4: eine Explosionsansicht der wesentlichen Teile der erfindungsgemäßen Vorrichtung;
- Fig. 5: die Anordnung der Fig. 4 im zusammengesetzten Zustand; und
- Fig. 6: die zeitliche bzw. räumliche Bewegung der als Rührglied dienenden Kugel.

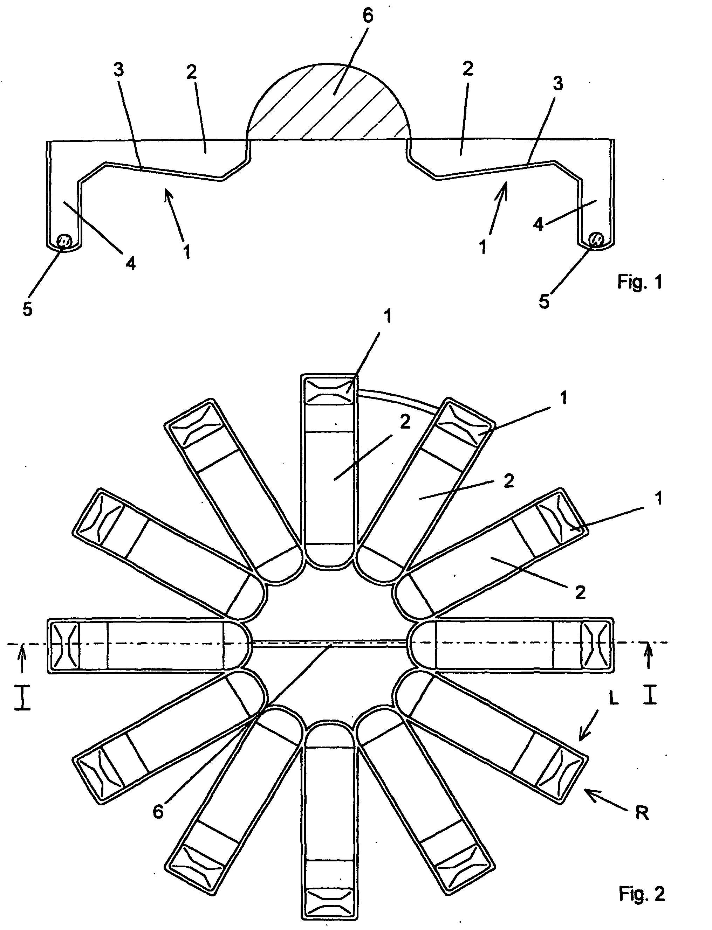

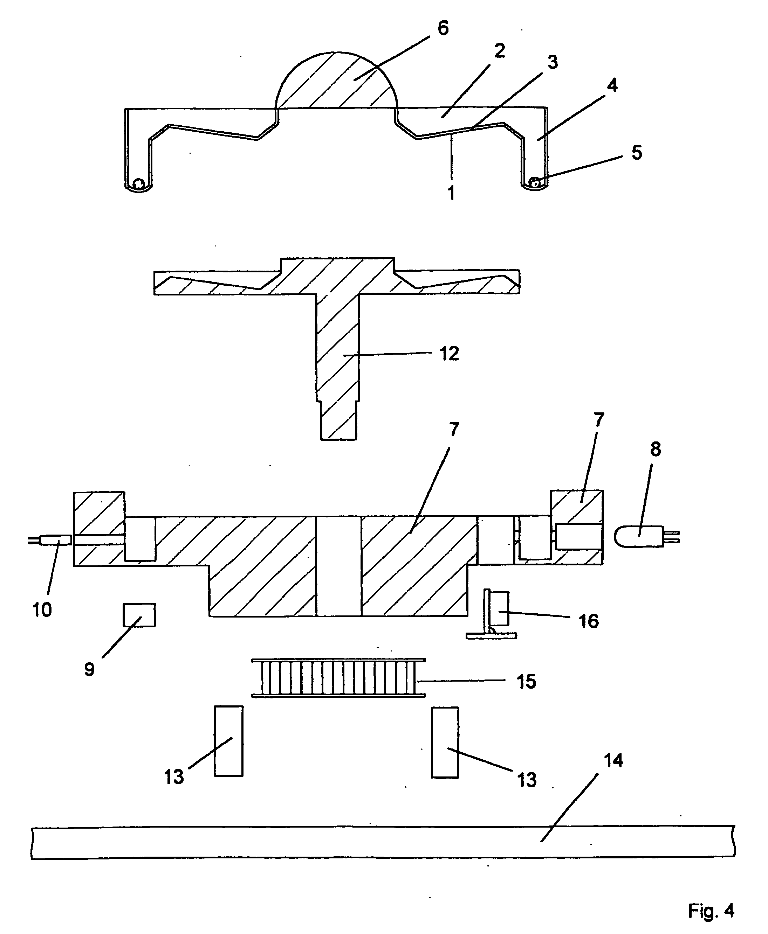

Wie dies in den Fig. 1 und 2 gezeigt ist, weist die Küvettenanordnung zwölf Küvetten 1 auf, von denen jeweils zwei diametral einander gegenüber angeordnet sind. Zum Zentrum der kreisförmigen Anordnung hin befindet sich ein Aufnahmeraum 2 für das Reagenz, der einen radial nach außen ansteigenden Boden 3 aufweist. Radial nach außen schließt sich jeweils eine Reaktionskammer 4 an, die sich in Achsialrichtung weiter nach unten erstreckt als der Aufnahmeraum 2. In den Aufnahmeraum 2 wird das Reagenz eingebracht, in die Reaktionskammer 4 die zu untersuchende Flüssigkeit. In der Reaktionskammer 4 befindet sich jeweils noch ein kugelförmiges magnetisch anziehbares Rührglied 5. Die Anordnung kann dabei mit Hilfe eines Griffes 6 transportiert und in den Rotor eingesetzt werden, der in Fig. 4 mit 12 bezeichnet ist. Auf den Griff 6 kann verzichtet werden, da man die Anordnung an den Küvetten ergreifen kann.

Der Rotor 12 ist in einem Inkubator 7 eingesetzt, an dessen Umfang Meßstationen 8 mit einer lichtemitierenden Diode vorgesehen sind, die unterschiedliche Wellenlängen haben. An einer anderen Stelle ist ein Magnet 9 angeordnet, mit dem das Rührglied 5 bewegt wird. Mit Sensoren 10 kann der Ort dieses magnetischen Rührgliedes detektiert werden. Der Rotor 12 und die Anordnung von Küvetten dreht sich bei der Messung in Richtung des Pfeiles 11.

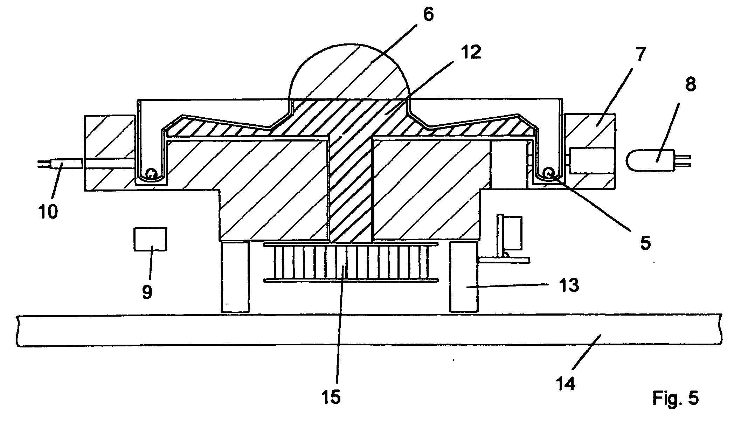

In Fig. 4 ist eine Explosionsansicht der erfindungsgemäßen Anordnung gezeigt. Die kreisförmige Anordnung von Küvetten 1 wird auf den Rotor 12 aufgesetzt, dessen obere Oberfläche gut an die untere Oberfläche der Anordnung von Küvetten 1 angepaßt ist, so daß hier guter Wärmekontakt stattfindet. Dieser Rotor 12 ist in den Inkubator 7 eingesetzt, der mit Hilfe von Distanzstücken 13 an einer Grundplatte 14 befestigt ist. Der Antrieb des Rotors 12 erfolgt dabei über eine Zahnriemenscheibe 15. Fig. 5 zeigt die Anordnung der Fig. 4 im zusammengesetzten Zustand.

Bei der Anordnung der Fig. 4 und 5 ist gezeigt, daß eine Messung des hindurchgehenden Lichtes erfolgt, das von der lichtemitierenden Diode 8 ausgeht und von einer Fotodiode 16 empfangen wird. Statt dessen könnte auch eine Messung in reflektiertem Licht erfolgen.

Wie erwähnt wird die Messung dadurch begonnen, daß Reagenzien in die Aufnahmeräume 2 und Körperflüssigkeiten in die Reaktionskammern 4 eingefüllt werden. Die Anordnung von Küvetten 1 kann dann auf den Rotor 12 aufgesetzt werden und zunächst einmal um 360° rotiert werden, damit festgestellt werden kann, welche Küvetten Flüssigkeiten enthalten, die untersucht werden sollen. Da der Inkubator 7 und der Rotor 12 erwärmt sind, findet dabei eine Inkubation auf die gewünschte Temperatur von meist 37°C statt, die nach ungefähr zwei Minuten erreicht ist. Es wird dann die Anordnung von Küvetten 1 in schnelle Rotation versetzt, so daß die Reagenzien aufgrund der Fliehkraft vom Aufnahmeraum 2 in die Reaktionskammer 4 gelangen und dort durch das Rührglied 5 gemischt werden, daß durch den Magneten 9 bewegt wird. Die Messung erfolgt dann an den Meßstationen 8/16 und 10.

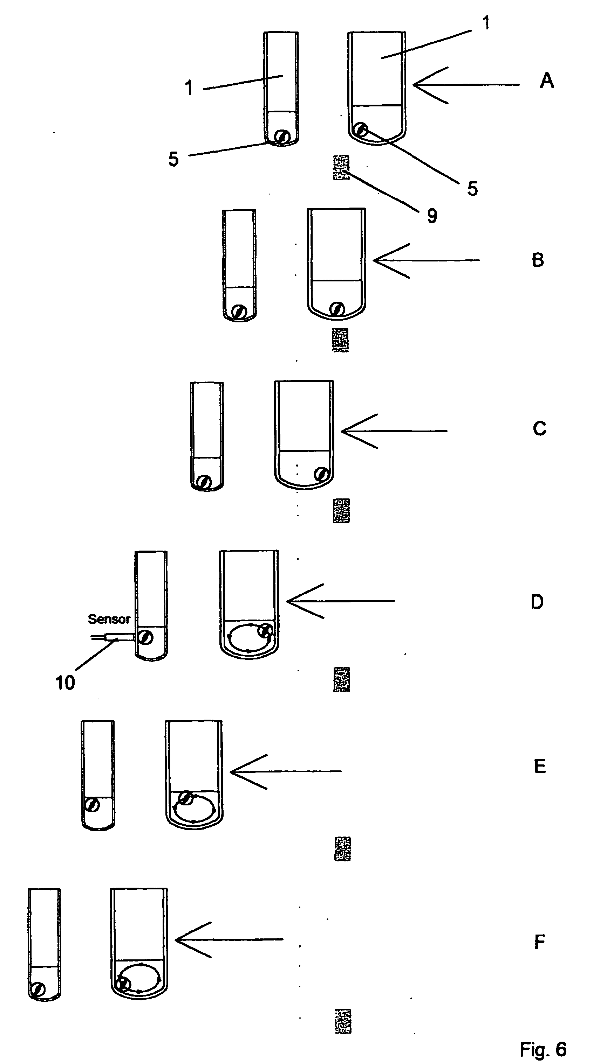

Fig. 6 zeigt die Bewegung des kugelförmigen Rührgliedes 5 schematisch bei der Drehung der Anordnung von Küvetten, und zwar rechts radial von außen und links in Umfangsrichtung, d. h. rechts in Blickrichtung des Pfeiles R von Fig. 2 und links in Richtung des Pfeiles L von Fig. 2.

Wie man in Fig. 6 erkennt, weist der Boden der Küvetten in Umfangsrichtung und in Radialrichtung konkave Wölbungen unterschiedlicher Krümmungen auf. Ursprünglich befindet sich die Kugel 5 an der tiefsten Stelle in der Mitte der Reaktionskammer. Die Wölbungen sind dabei so stark ausgebildet, daß die Kugel durch die Fliehkraft nur unwesentlich von dieser tiefsten Stelle wegbewegt werden kann. Dies geschieht aber, wenn wie in Fig. 6 bei A gezeigt, sich die entsprechende Küvette 1 an den Magneten 9 annähert. Die Kugel wird dabei, wie dies bei B und C in Fig. 6 gezeigt ist, vom Magneten 9 angezogen und bewegt sich auf der Wölbung nach oben und beginnt dann eine in den Fig. B - F gezeigte kreisende Bewegung. Dabei hat, bei der Stellung von D in Fig. 6, die Kugel die untere Wölbung verlassen und kann sich auf der geraden Wand bewegen, so daß sie sich aufgrund der Fliehkraft nach außen bewegt und in die Nähe des Sensors 10 gelangt, wo ihre Anwesenheit detektiert werden kann. Anschließend bewegt sich die Kugel dann wieder nach unten, bis der Zyklus erneut beginnt. Ist die Flüssigkeit geronnen, verbleibt die Kugel aber in der Stellung von C in Fig. 6 stehen, wird nicht mehr vom Sensor 10 detektiert, so daß damit der geronnene Zustand festgestellt werden kann, falls dies nicht durch optische Methoden geschieht.

Wie sich aus den Fig. ersehen läßt, sind alle Kammern und Aufnahmeräume nach oben hin offen. Die Anordnung von Küvetten kann also in einem einzigen Spritzgußvorgang geformt werden. Dies wird erleichtert, wenn sich die Kammern und Aufnahmeräume nach oben hin leicht erweitern. Dadurch werden die Küvettenanordnungen auch stapelbar.

## Patentansprüche

1. Küvettenanordnung zum Untersuchen von Körperflüssigkeiten mit mehreren Küvetten (1), bei dem die Küvetten (1) in einer kreisförmigen Anordnung miteinander verbunden sind, jeweils einen Aufnahmeraum (2) für das Reagenz mit einem radial nach außen ansteigenden Boden (3) aufweisen, und die Reaktionskammer (4) radial außen vom Aufnahmeraum (2) angeordnet ist und sich in Axialrichtung bis in größere Tiefe als der Aufnahmeraum (2) erstreckt, **dadurch gekennzeichnet, daß** in jeder Reaktionskammer unbefestigt ein Rührglied (5) aus magnetisch anziehbarem Material angeordnet ist.

2. Vorrichtung zum Untersuchen von Körperflüssigkeiten mit einer herausnehmbaren Küvettenanordnung gemäß Anspruch 1, wobei in die Küvetten (1) die zu untersuchende Körperflüssigkeit und ein Reagenz getrennt einbringbar und nach Ablauf einer Inkubationszeit in der Reaktionskammer (4) zusammenbringbar sind, mit einem Rotor (12), mit dessen Hilfe die Küvettenanordnung um ihre Achse drehbar ist und mit einem Magneten (9) und mindestens einer Meßstation (8, 10), die stationär im Bereich des Umfangs der Küvettenanordnung vorgesehen sind.

3. Vorrichtung nach Anspruch 2, **dadurch gekennzeichnet daß** mehrere Meßstationen (8/16, 10) vorgesehen sind.

4. Vorrichtung nach Anspruch 2 oder 3, **dadurch gekennzeichnet, daß** mindestens eine Meßstation (8/16) für optische Detektion vorgesehen ist.

5. Vorrichtung nach einem der Ansprüche 2 bis 4, **dadurch gekennzeichnet, daß** Meßstationen (8/16) für optische Transmissions- und/oder Reflexionsmessungen vorgesehen sind.

6. Vorrichtung nach einem der Ansprüche 2 bis 5, **dadurch gekennzeichnet, daß** eine Meßstation (10) vorgesehen ist, die den Ort des magnetisch anziehbaren Körpers detektiert.

7. Vorrichtung nach einem der Ansprüche 2 bis 6, **dadurch gekennzeichnet, daß** das magnetisch anziehbare Rührglied (5) eine Kugel ist.

8. Verfahren zum Betreiben einer Vorrichtung nach einem der Ansprüche 2 bis 7, bei dem Reagenz in den Aufnahmeraum und Körperflüssigkeit in die Reaktionskammer wenigstens einer der Küvetten eingefüllt werden, die Küvettenanordnung in die Vorrichtung eingesetzt wird und mit Hilfe des Rotors eine Drehung um mindestens 360° durchgeführt wird, um festzustellen, welche Küvetten Flüssigkeiten enthalten, die untersucht werden sollen, die Küvetten mit den Reagenzien und Proben inkubiert werden, durch anschließende schnelle Rotation der Küvettenanordnung die Reagenzien in die Reaktionskammer verbracht werden, und anschließend die optischen und/oder magnetischen Messungen durchgeführt werden.

## Claims

1. Cuvette arrangement for analysing body fluids, having a plurality of cuvettes (1), in which the cuvettes (1) are connected to one another in a circular arrangement, and respectively have a holding space (2) for the reagent with a bottom (3) rising radially outwards, and the reaction chamber (4) is arranged radially outwards from the holding space (2) and extends in the axial direction to a greater depth than the holding space (2), **characterized in that** a stirrer (5) made of magnetically attractable material is arranged non-securely in each reaction chamber.

2. Device for analysing body fluids, having a removable cuvette arrangement according to Claim 1, wherein the body fluid to be analysed and a reagent can be introduced separately into the cuvettes (1) and can be brought together into the reaction chamber (4) after an incubation time has elapsed, having a rotor (12), with the aid of which the cuvette arrangement can be rotated about its axis and having a magnet (9) and at least one measuring station (8, 10) which are provided stationarily in the region of the circumference of the cuvette arrangement.

3. Device according to Claim 2, **characterized in that** a plurality of measuring stations (8/16, 10) are provided.

4. Device according to Claim 2 or 3, **characterized in that** at least one measuring station (8/16) is intended for optical detection.

5. Device according to one of Claims 2 to 4, **characterized in that** measuring stations (8/16, 10) for optical transmission and/or reflection measurements are provided.

6. Device according to one of Claims 2 to 5, **characterized in that** a measuring station (10) is provided which detects the position of the magnetically attractable body.

7. Device according to one of Claims 2 to 6, **characterized in that** the magnetically attractable stirrer (5) is a ball.

8. Method for operating a device according to one of Claims 2 to 7, in which at least one of the cuvettes is filled with reagent in the holding space and body fluid in the reaction chamber, the cuvette arrangement is fitted into the device and, with the aid of the rotor, a rotation through at least 360° is carried out in order to identify which cuvettes contain liquids which should be investigated, the cuvettes with the reagents and samples are incubated, the reagents are taken into the reaction chambers by subsequent rapid rotation of the cuvette arrangement, and the optical and/or magnetic measurements are subsequently carried out.

## Revendications

1. Agencement de cuvettes pour l'analyse de liquides corporels, comportant plusieurs cuvettes (1), dans lequel les cuvettes (1) sont reliées entre elles dans une disposition circulaire, présentent chacune une chambre de réception (2) pour le réactif avec un fond (3) montant radialement vers l'extérieur et la chambre de réaction (4) est disposée radialement à l'extérieur de la chambre de réception (2) et s'étend dans la direction axiale jusqu'à une profondeur plus grande que celle de la chambre de réception (2), **caractérisé en ce qu'**un élément d'agitation (5) en matériau magnétiquement attractible, est disposé, non fixé, dans chaque chambre de réaction (4).

2. Dispositif pour l'analyse de liquides corporels, comportant un agencement de cuvettes extractible selon la revendication 1, le liquide corporel à analyser et un réactif pouvant être introduits séparément dans les cuvettes (1) et être amenés ensembles après un temps d'incubation dans la chambre de réaction (4), comportant un rotor (12), au moyen duquel l'agencement de cuvettes peut être mis en rotation autour de son axe et un aimant (9) et au moins une station de mesure (8, 10) qui sont prévus stationnaires dans la zone de la périphérie de l'agencement de cuvettes.

3. Dispositif selon la revendication 2, **caractérisé en ce que** plusieurs stations de mesure (8/ 16, 10) sont prévues.

4. Dispositif selon la revendication 2 ou 3, **caractérisé en ce que** au moins une station de mesure (8/16) est prévue pour une détection optique.

5. Dispositif selon l'une des revendications 2 ou 4, **caractérisé en ce que** des stations de mesure (8/16) sont prévues pour des mesures de transmission et/ou de réflexion optiques.

6. Dispositif selon l'une des revendications 2 ou 4, **caractérisé en ce qu'**une station de mesure (10) est prévue, qui détecte l'emplacement du corps magnétique attractible.

7. Dispositif selon l'une des revendications 2 ou 4, **caractérisé en ce que** l'élément d'agitation (5) en matériau magnétiquement attractible est une bille.

8. Procédé pour mettre en oeuvre un dispositif selon l'une des revendications 2 à 7, dans lequel on introduit le réactif dans la chambre de réception et le liquide corporel dans la chambre de réaction d'au moins l'une des cuvette, l'agencement de cuvettes est installé dans le dispositif et on effectue une rotation de 360° à l'aide du rotor pour déterminer quelles cuvettes contiennent du liquide et doivent être soumises à l'analyse, on fait incuber les cuvettes avec les réactifs et les échantillons, les réactifs sont amenés dans les chambre de réaction par une rotation rapide consécutive de l'agencement de cuvettes et ensuite les mesures optiques et/ou magnétiques sont effectuées.
